# EUROPÄISCHE PATENTSCHRIFT

(11) **EP 4 562 484 B1**
(45) Veröffentlichungstag und Bekanntmachung des Hinweises auf die Patenterteilung: **22.04.2026**
(21) Anmeldenummer: 23734671.3
(22) Anmeldetag: 26.06.2023
(51) Int. Cl.: G05D 1/242, G05D 1/246, G05D 1/622, G05D 105/28, G05D 107/70, G05D 109/10

(54) **VERFAHREN ZUM BETRIEB EINER TECHNISCHEN ANLAGE UND TECHNISCHE ANLAGE**
METHOD FOR OPERATING A TECHNICAL INSTALLATION, AND TECHNICAL INSTALLATION
PROCÉDÉ DE COMMANDE D'UNE INSTALLATION TECHNIQUE, ET INSTALLATION TECHNIQUE

(30) Priorität: 26.07.2022 DE 102022002715
(43) Veröffentlichungstag der Anmeldung: 04.06.2025
(73) Patentinhaber: SEW-EURODRIVE GmbH & Co. KG, 76646 Bruchsal (DE)
(72) Erfinder: SLISKOVIC, Maja, 76275 Ettlingen (DE); MALLIK, Quamrul Hasan, 76139 Karlsruhe (DE); BETZ, Patrick, 76297 Stutensee (DE)
(86) Internationale Anmeldenummer: PCT/EP2023/067306
(87) Internationale Veröffentlichungsnummer: WO 2024/022692

(56) Entgegenhaltungen:
- EP-A1- 3 693 825
- DE-A1- 102018 009 114
- US-A1- 2020 089 970
- US-B2- 8 761 925

## Beschreibung

Die Erfindung betrifft ein Verfahren zum Betrieb einer technischen Anlage, welche mindestens ein autonomes Fahrzeug umfasst, wobei das autonome Fahrzeug mindestens einen Sensor zur Erkennung von Gegenständen aufweist, und wobei das autonome Fahrzeug über eine Karte der technischen Anlage verfügt. Die Erfindung betrifft auch eine technische Anlage, welche mit dem erfindungsgemäßen Verfahren betreibbar ist.

Bei der technischen Anlage handelt es sich insbesondere um eine industrielle Anwendung, beispielsweise ein Produktionswerk, eine Industriehalle oder ein Logistikzentrum. Die autonomen Fahrzeuge dienen beispielsweise zum Transport von Material innerhalb der technischen Anlage. In der technischen Anlage befinden sich auch weitere Gegenstände. Die autonomen Fahrzeuge weisen Sensoren zur Erfassung solcher Gegenstände und Entfernungen zu solchen Gegenständen auf. Bei einem solchen Sensor handelt es sich beispielsweise um einen Laserscanner.

Aus dem Dokument DE 10 2018 009 114 A1 ist ein Verfahren zur Bestimmung der Position eines auf einer Verfahrfläche bewegbaren Mobilteils in einer Anlage bekannt. Das Mobilteil weist einen Laserscanner zur Erfassung der auf das Mobilteil relativ bezogenen Positionen von auf der Verfahrfläche angeordneten Objekten auf.

Aus dem Dokument DE 10 2019 001 253 A1 ist Verfahren zum Betreiben einer technischen Anlage bekannt, welche mindestens ein mobiles System aufweist, das auf einer Verkehrsfläche der technischen Anlage verfahrbar ist. Das mobile System erfasst mit Hilfe von entsprechenden Sensoren Objekte in der technischen Anlage. Die Positionen der so erfassten Objekte werden dabei mit vermuteten Positionen von Objekten gemäß einer Karte der technischen Anlage verglichen.

Aus der US 2020/0089970 A1 ist ein Verfahren zur Erkennung von Hindernissen auf einer Fahrbahn bekannt.

Aus der EP 3 693 825 A1 ist ein Verfahren zur Aktualisierung von Informationen einer Umgebung mit Hindernissen bekannt.

Aus der US 8,761,925 B2 ist ein Verfahren zum Erzeugen einer Karte mittels eines Roboters bekannt.

Den Gegenständen in der technischen Anlage, beispielsweise Wände, Pfeiler, oder Produktionsmaschinen, sind Objekte zugeordnet, die in der Karte verzeichnet sind. Wenn von einem Sensor eines autonomen Fahrzeugs ein Gegenstand in der technischen Anlage erkannt wird, so wird durch Vergleichen des erkannten Gegenstandes mit einem Objekt, welches in der Karte verzeichnet ist, ein Standort des autonomen Fahrzeugs in der Karte bestimmt.

Problematisch ist es, wenn in der Karte Objekte verzeichnet sind, welche beweglichen Gegenständen, beispielsweise Kisten, Container oder Transportwagen, zugeordnet sind. Ein solcher Gegenstand befindet sich möglicherweise nicht an dem gleichen Ort, an welchem das zugeordnete Objekt in der Karte verzeichnet ist. Ein Vergleich eines erkannten Gegenstandes mit einem derartigen Objekt, welches in der Karte verzeichnet ist, kann daher zu einer fehlerhaften Bestimmung des Standorts des autonomen Fahrzeugs in der Karte führen.

Der Erfindung liegt die Aufgabe zugrunde, ein Verfahren zum Betrieb einer technischen Anlage sowie eine technische Anlage weiterzubilden.

Die Aufgabe wird durch ein Verfahren zum Betrieb einer technischen Anlage mit den in Anspruch 1 angegebenen Merkmalen gelöst. Vorteilhafte Ausgestaltungen und Weiterbildungen sind Gegenstand der Unteransprüche. Die Aufgabe wird auch durch eine technische Anlage mit den in Anspruch 14 angegebenen Merkmalen gelöst.

Es wird ein Verfahren zum Betrieb einer technischen Anlage vorgeschlagen. Die technische Anlage umfasst mindestens ein autonomes Fahrzeug, wobei das autonome Fahrzeug mindestens einen Sensor zur Erkennung von Gegenständen aufweist, und wobei das autonome Fahrzeug über eine Karte der technischen Anlage verfügt.

Die technische Anlage umfasst mindestens eine statische Zone, welcher in der Karte ein statischer Bereich zugeordnet ist, in welchem mindestens ein statisches Objekt verzeichnet ist. Die technische Anlage umfasst auch mindestens eine temporäre Zone, welcher in der Karte ein temporärer Bereich zugeordnet ist, in welchem temporäre Objekte verzeichenbar sind. Wenn von dem Sensor in einer temporären Zone ein Gegenstand erkannt wird, so wird dem erkannten Gegenstand ein temporäres Objekt zugeordnet, und das temporäre Objekt wird in dem der temporären Zone zugeordneten temporären Bereich der Karte verzeichnet. Wenn das autonome Fahrzeug sich von der temporären Zone entfernt, so werden alle temporären Objekte, die in dem der temporären Zone zugeordneten temporären Bereich verzeichnet sind, gelöscht.

Die temporären Objekte in einer temporären Zone werden beispielsweise unmittelbar, nachdem das autonome Fahrzeug sich von der temporären Zone entfernt hat gelöscht. Die temporären Objekte in einer temporären Zone werden spätestens dann gelöscht, wenn sich das Fahrzeug dieser temporären Zone wieder nähert und die Sensoren am Fahrzeug diesen Bereich wieder erfassen können.

Die in einem statischen Bereich verzeichneten statischen Objekte sind jeweils einem Gegenstand zugeordnet. Der besagte Gegenstand befindet sich dabei in derjenigen statischen Zone, welcher der besagte statische Bereich der Karte zugeordnet ist. Gegenstände, denen ein statisches Objekt zugeordnet ist, sind in der Regel unbeweglich. Derartige Gegenstände sind beispielsweise Wände, Pfeiler, oder Produktionsmaschinen.

Temporäre Zonen sind beispielsweise Abstellflächen, die frei von unbeweglichen Gegenständen sind. Temporäre Zonen dienen insbesondere zum zeitweiligen Abstellen von beweglichen Gegenständen. Derartige bewegliche Gegenstände, denen ein temporäres Objekt zugeordnet wird, sind beispielsweise Kisten, Container oder Transportwagen.

Bevor das autonome Fahrzeug sich der temporären Zone nähert ist der temporäre Bereich in der Karte frei von temporären Objekten. Wenn in der temporären Zone ein Gegenstand erkannt wird, so wird ein temporäres Objekt in dem temporären Bereich verzeichnet. Nachdem das autonome Fahrzeug sich von der temporären Zone entfernt hat ist der temporäre Bereich in der Karte wieder frei von temporären Objekten.

Das erfindungsgemäße Verfahren gestattet, temporäre Objekte, die beweglichen Gegenständen zugeordnet sind, zeitweilig zur Bestimmung des Standorts des autonomen Fahrzeugs in der Karte zu nutzen. Derartige Gegenstände verbleiben in der Regel vorübergehend an dem gleichen Ort, insbesondere so lange, wie sich das Fahrzeug in der temporären Zone aufhält. Somit ist die Bestimmung des Standorts des autonomen Fahrzeugs in der Karte mit erhöhter Präzision möglich. Wenn das autonome Fahrzeug sich zu einem späteren Zeitpunkt der temporären Zone wieder nähert, so ist ungewiss, ob die beweglichen Gegenstände sich noch am gleichen Ort befinden. Deshalb werden alle temporären Objekte gelöscht, wenn das autonome Fahrzeug sich von der temporären Zone entfernt.

Gemäß einer bevorzugten Ausgestaltung der Erfindung wird bei der Erkennung eines Gegenstandes von dem mindestens einen Sensor eine Entfernung zu dem Gegenstand erfasst, und eine Richtung, in welcher sich der Gegenstand befindet, wird erfasst.

Gemäß einer vorteilhaften Ausgestaltung der Erfindung ist der mindestens einen Sensor als Laserscanner oder als 3D-Kamera ausgebildet.

Gemäß einer vorteilhaften Ausgestaltung der Erfindung weist das autonome Fahrzeug eine Antriebseinrichtung, einen elektrischen Energiespeicher zur Versorgung der Antriebseinrichtung, eine Steuereinheit zur Steuerung der Antriebseinrichtung sowie eine Kommunikationsvorrichtung zur drahtlosen Kommunikation über ein Netzwerk auf. Die Antriebseinrichtung umfasst beispielsweise einen Elektromotor, ein Getriebe und Antriebsräder. Der elektrische Energiespeicher ist insbesondere eine wiederaufladbare Batterie.

Gemäß einer vorteilhaften Ausgestaltung der Erfindung wird, wenn von dem mindestens einen Sensor ein in einer statischen Zone befindlicher Gegenstand erkannt wird, durch Vergleichen des erkannten Gegenstandes mit mindestens einem statischen Objekt, welches in dem statischen Bereich verzeichnet ist, welcher der statischen Zone zugeordnet ist, ein Standort des autonomen Fahrzeugs in der Karte bestimmt. Dabei wird der erkannte Gegenstand insbesondere mit demjenigen statischen Objekt verglichen, welches dem erkannten Gegenstand zugeordnet ist.

Gemäß einer vorteilhaften Ausgestaltung der Erfindung werden, wenn das autonome Fahrzeug sich von der temporären Zone entfernt, alle in dem der temporären Zone zugeordneten temporären Bereich verzeichneten temporären Objekte unverzüglich gelöscht. Wenn das Fahrzeug sich der temporären Zone erneut nähert, so sind alle zuvor bekannten temporären Objekte gelöscht.

Gemäß einer anderen vorteilhaften Ausgestaltung der Erfindung werden, wenn das autonome Fahrzeug sich von der temporären Zone entfernt, alle in dem der temporären Zone zugeordneten temporären Bereich verzeichneten temporären Objekte nach einer bestimmten Zeitdauer gelöscht. Wenn das Fahrzeug sich der temporären Zone während der bestimmten Zeitdauer erneut nähert, so sind alle zuvor bekannten temporären Objekte noch bekannt. Die bestimmte Zeitdauer ist dabei fest vorgegeben und beträgt beispielsweise 15 Minuten oder eine Stunde.

Vorzugsweise wird einem Gegenstand, welcher in einer temporären Zone erkannt wird, nur dann ein temporäres Objekt zugeordnet, wenn der besagte Gegenstand erstmalig erkannt wird. Wenn der besagte Gegenstand bereits zuvor erkannt wurde, so ist dem Gegenstand bereits ein temporäres Objekt zugeordnet, und dem Gegenstand wird kein weiteres temporäres Objekt zugeordnet.

Gemäß einer vorteilhaften Weiterbildung der Erfindung werden einem temporären Objekt ein Aufenthaltszähler und ein Ortszähler zugeordnet. Der Aufenthaltszähler wird inkrementiert, wenn das temporäre Objekt erkannt wird. Der Ortszähler wird inkrementiert, wenn ein Ort, an welchem sich das temporäre Objekt zuletzt befunden hat, von dem mindestens einen Sensor beobachtet wird. Dann wird ein Quotient aus dem Aufenthaltszähler und dem Ortszähler gebildet. Der besagte Quotient beschreibt eine Wahrscheinlichkeit, mit welcher sich das temporäre Objekt an dem besagten Ort befindet.

Gemäß einer vorteilhaften Weiterbildung der Erfindung werden, wenn das autonome Fahrzeug sich von der temporären Zone entfernt, alle in dem der temporären Zone zugeordneten temporären Bereich verzeichneten temporären Objekte nach einer variablen Zeitdauer gelöscht. Die variable Zeitdauer ist dabei von dem aus dem Aufenthaltszähler und dem Ortszähler gebildeten Quotient abhängig. Die variable Zeitdauer ist somit von der Wahrscheinlichkeit, mit welcher sich das temporäre Objekt an dem besagten Ort befindet, abhängig. Insbesondere ist die variable Zeitdauer größer, wenn die besagte Wahrscheinlichkeit größer ist.

Gemäß einer vorteilhaften Ausgestaltung der Erfindung wird, wenn von dem mindestens einen Sensor ein in einer temporären Zone befindlicher Gegenstand erkannt wird, durch Vergleichen des erkannten Gegenstandes mit mindestens einem temporären Objekt, welches in dem temporären Bereich verzeichnet ist, welcher der temporären Zone zugeordnet ist, ein Standort des autonomen Fahrzeugs in der Karte bestimmt. Dabei wird der erkannte Gegenstand insbesondere mit demjenigen temporären Objekt verglichen, welches dem erkannten Gegenstand zugeordnet ist.

Gemäß einer vorteilhaften Ausgestaltung der Erfindung werden, bevor das autonome Fahrzeug sich der temporären Zone nähert, alle temporären Objekte gelöscht, die in dem temporären Bereich verzeichnet sind, welcher der temporären Zone zugeordnet ist. Somit ist sichergestellt, dass der temporäre Bereich in der Karte frei von temporären Objekten ist, wenn das autonome Fahrzeug in die temporäre Zone einfährt.

Gemäß einer vorteilhaften Ausgestaltung der Erfindung werden, wenn einem von dem Sensor erkannten Gegenstand ein temporäres Objekt zugeordnet wird, Informationen zu dem temporären Objekt über ein Netzwerk an einen Server in der technischen Anlage übermittelt. Die besagten Informationen enthalten insbesondere Angaben über die Art des erkannten Gegenstandes, über den Ort, an welchem sich der erkannte Gegenstand befindet und über den Zeitpunkt der Erkennung des Gegenstandes.

Gemäß einer vorteilhaften Ausgestaltung der Erfindung werden, wenn einem von dem Sensor erkannten Gegenstand ein temporäres Objekt zugeordnet wird, Informationen zu dem temporären Objekt über ein Netzwerk an mindestens ein weiteres autonomes Fahrzeug in der technischen Anlage übermittelt. Die besagten Informationen enthalten insbesondere Angaben über die Art des erkannten Gegenstandes, über den Ort, an welchem sich der erkannte Gegenstand befindet und über den Zeitpunkt der Erkennung des Gegenstandes.

Eine erfindungsgemäße technische Anlage umfasst mindestens ein autonomes Fahrzeug,
wobei das autonome Fahrzeug mindestens einen Sensor zur Erkennung von Gegenständen aufweist, und wobei das autonome Fahrzeug über eine Karte der technischen Anlage verfügt. Dabei ist die erfindungsgemäße technische Anlage mit dem erfindungsgemäßen Verfahren betreibbar.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung einer Karte einer technischen Anlage in einem ersten Betriebszustand und
- Figur 2:: eine schematische Darstellung einer Karte der technischen Anlage in einem zweiten Betriebszustand.

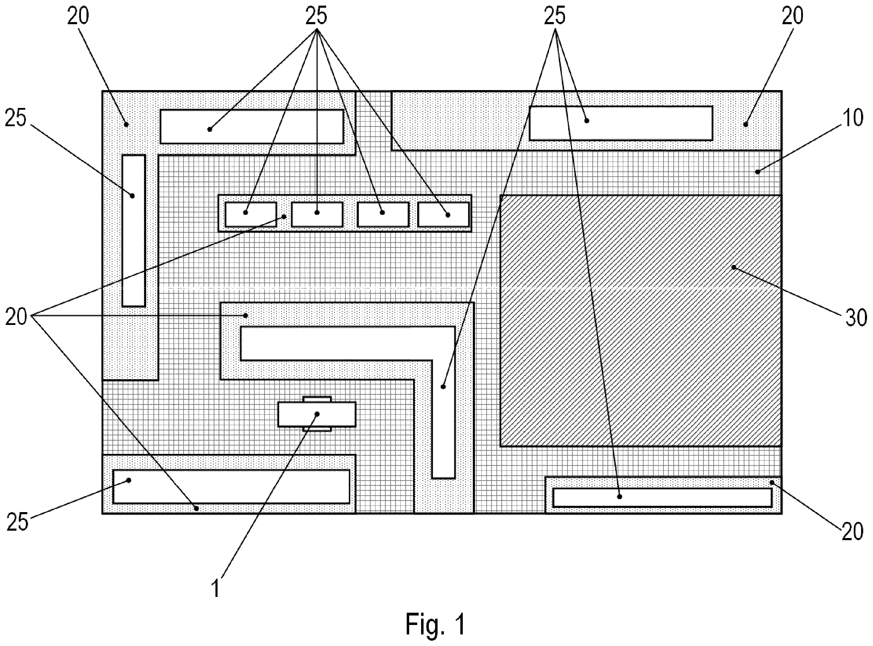

Figur 1 zeigt eine schematische Darstellung einer Karte einer technischen Anlage in einem ersten Betriebszustand. Bei der technischen Anlage handelt es sich um eine industrielle Anwendung, beispielsweise ein Produktionswerk, eine Industriehalle oder ein Logistikzentrum. Die technische Anlage umfasst mehrere autonome Fahrzeuge 1. In der vorliegenden Darstellung ist lediglich ein solches autonomes Fahrzeug 1 gezeigt. Die autonomen Fahrzeuge 1 dienen insbesondere zum Transport von Material innerhalb der technischen Anlage.

Das autonome Fahrzeug 1 weist eine Antriebseinrichtung, einen elektrischen Energiespeicher zur Versorgung der Antriebseinrichtung sowie eine Steuereinheit zur Steuerung der Antriebseinrichtung auf. Ferner weist das autonome Fahrzeug 1 eine Kommunikationsvorrichtung zur drahtlosen Kommunikation mit anderen autonomen Fahrzeugen 1 sowie mit einem übergeordneten Server in der technischen Anlage auf. Die Kommunikationsvorrichtung des autonomen Fahrzeugs 1 ist beispielsweise zur Datenübertragung mittels WLAN, Bluetooth oder Licht ausgebildet.

Das autonome Fahrzeug 1 weist zwei Sensoren auf. Die Sensoren des autonomen Fahrzeugs 1 sind vorliegend als Laserscanner ausgebildet. Alternativ sind die Sensoren beispielsweise als 3D-Kameras ausgebildet. Die Sensoren dienen zur Erkennung von Gegenständen in der technischen Anlage. Bei der Erkennung eines Gegenstandes werden von den Sensoren eine Entfernung zu dem Gegenstand sowie eine Richtung, in welcher sich der Gegenstand befindet, erfasst. Die Sensoren sind an gegenüberliegenden Ecken des autonomen Fahrzeugs 1 angebracht und erfassen jeweils Gegenstand in einem Winkelbereich von etwa 270°.

Die technische Anlage umfasst mehrere dynamische Zonen. Eine dynamische Zone weist Bereiche auf, welche von dem autonomen Fahrzeug 1 befahrbar sind, beispielswiese leere Flächen und Wege.

Die technische Anlage umfasst mehrere statische Zonen. In einer statischen Zone befinden sich unbeweglich Gegenstände, welche für das autonome Fahrzeug 1 Hindernisse darstellen, beispielsweise Wände, Pfeiler, oder Produktionsmaschinen.

Die technische Anlage umfasst mehrere temporäre Zonen. Temporäre Zonen sind beispielsweise Abstellflächen, die frei von unbeweglichen Gegenständen sind. Temporäre Zonen dienen insbesondere zum zeitweiligen Abstellen von beweglichen Gegenständen. Derartige bewegliche Gegenstände sind beispielsweise Kisten, Container oder Transportwagen. Temporäre Zonen sind von dem autonomen Fahrzeug 1 grundsätzlich befahrbar, mit Ausnahme von Orten, an welche bewegliche Gegenstände abgestellt sind.

Das autonome Fahrzeug 1 verfügt über eine Karte der technischen Anlage. Insbesondere verfügen alle autonomen Fahrzeuge 1 in der technischen Anlage über die gleiche Karte. Die Karte wird zuvor erstellt und in die autonomen Fahrzeuge 1 geladen. Den dynamischen Zonen der technischen Anlage ist jeweils in der Karte ein dynamischer Bereich 10 zugeordnet. Den statischen Zonen der technischen Anlage ist jeweils in der Karte ein statischer Bereich 20 zugeordnet. Den temporären Zonen der technischen Anlage ist jeweils in der Karte ein temporärer Bereich 30 zugeordnet. Vorliegend sind ein dynamischer Bereich 10, mehrere statische Bereiche 20 und ein temporärer Bereich 30 in der Karte dargestellt.

Den unbeweglichen Gegenständen in den statischen Zonen, beispielsweise Wände, Pfeiler, oder Produktionsmaschinen, ist jeweils ein statisches Objekt 25 zugeordnet. Die besagten statischen Objekte 25 sind in der Karte verzeichnet. Beweglichen Gegenständen in den temporären Zonen, beispielsweise Kisten, Container oder Transportwagen, ist jeweils ein temporäres Objekt 32 zuordenbar. Die besagten temporären Objekte 32 sind in der Karte verzeichenbar. Auch das autonome Fahrzeug 1 ist in der Karte verzeichnet.

In der hier gezeigten Darstellung des ersten Betriebszustandes befindet sich das autonome Fahrzeug 1 an einem ersten Standort. Der erste Standort befindet sich in der dynamischen Zone, welcher der dynamische Bereich 10 zugeordnet ist. Der erste Standort ist entfernt von der temporären Zone, welcher der temporäre Bereich 30 zugeordnet ist. Insbesondere sind die Sensoren des autonomen Fahrzeugs 1 nicht in der Lage, bewegliche Gegenstände in der besagten temporären Zone zu erkennen. Somit ist für das autonome Fahrzeug 1 nicht ersichtlich, ob bewegliche Gegenstände in der temporären Zone abgestellt sind.

Falls in der Karte in dem der temporären Zone zugeordneten temporären Bereich 30 noch temporäre Objekte 32 verzeichnet sind, so werden alle temporären Objekte 32 gelöscht, die in dem besagten temporären Bereich 30 verzeichnet sind, bevor das autonome Fahrzeug 1 sich der temporären Zone nähert. In der hier gezeigten Darstellung des ersten Betriebszustandes ist der temporäre Bereich 30 in der Karte frei von temporären Objekten 32.

Wenn von den Sensoren des autonomen Fahrzeugs 1 ein in der statischen Zone befindlicher Gegenstand erkannt wird, so wird durch Vergleichen des erkannten Gegenstandes mit einem statischen Objekt 25, welches in dem statischen Bereich 20 verzeichnet ist, welcher der statischen Zone zugeordnet ist, der Standort des autonomen Fahrzeugs 1 in der Karte bestimmt. Der erkannte Gegenstand wird dabei mit demjenigen statischen Objekt 25 verglichen, welches dem erkannten Gegenstand zugeordnet ist.

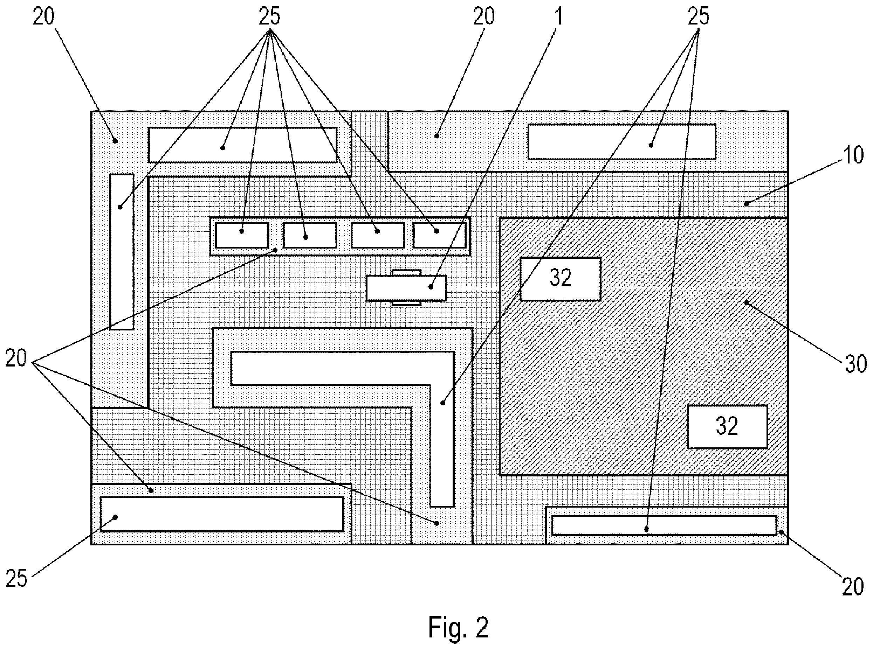

Figur 2 zeigt eine schematische Darstellung einer Karte der technischen Anlage in einem zweiten Betriebszustand. In der hier gezeigten Darstellung des zweiten Betriebszustandes befindet sich das autonome Fahrzeug 1 an einem zweiten Standort. Der zweite Standort befindet sich in der dynamischen Zone, welcher der dynamische Bereich 10 zugeordnet ist. Der zweite Standort befindet sich nahe der temporären Zone, welcher der temporäre Bereich 30 zugeordnet ist. Die Sensoren des autonomen Fahrzeugs 1 sind in der Lage, bewegliche Gegenstände in der besagten temporären Zone zu erkennen.

Wenn von den Sensoren des autonomen Fahrzeugs 1 ein Gegenstand in der temporären Zone erstmalig erkannt wird, so wird dem erkannten Gegenstand ein temporäres Objekt 32 zugeordnet. Das temporäre Objekt 32 wird dann in dem temporären Bereich 30 der Karte, welcher der temporären Zone zugeordnet ist, verzeichnet.

In der hier gezeigten Darstellung werden von den Sensoren des autonomen Fahrzeugs 1 zwei Gegenstände in der besagten temporären Zone erkannt. Den erkannten Gegenständen wird jeweils ein temporäres Objekt 32 zugeordnet, und die temporären Objekte 32 werden in dem besagten temporären Bereich 30 der Karte verzeichnet.

Einem Gegenstand, welcher in der temporären Zone erkannt wird, wird nur dann ein temporäres Objekt 32 zugeordnet, wenn der besagte Gegenstand erstmalig erkannt wird. Wenn der besagte Gegenstand bereits zuvor erkannt wurde, so ist dem Gegenstand bereits ein temporäres Objekt 32 zugeordnet, und dem Gegenstand wird kein weiteres temporäres Objekt 32 zugeordnet.

Zusätzlich werden jedem temporären Objekt 32 jeweils ein Aufenthaltszähler und ein Ortszähler zugeordnet. Der Aufenthaltszähler wird inkrementiert, wenn das temporäre Objekt 32 erkannt wird. Der Ortszähler wird inkrementiert, wenn der Ort, an welchem sich das temporäre Objekt 32 zuletzt gefunden hat, von einem der Sensoren beobachtet wird. Dann wird ein Quotient aus dem Aufenthaltszähler und dem Ortszähler gebildet. Der besagte Quotient beschreibt eine Wahrscheinlichkeit, mit welcher sich das temporäre Objekt 32 an dem besagten Ort befindet.

Wenn von den Sensoren des autonomen Fahrzeugs 1 ein Gegenstand in der temporären Zone erkannt wird, welchem bereits ein temporäres Objekt 32 zugeordnet ist, so wird durch Vergleichen des erkannten Gegenstandes mit demjenigen temporären Objekt 32, welches dem erkannten Gegenstand zugeordnet ist, der Standort des autonomen Fahrzeugs 1 in der Karte bestimmt.

Wenn das autonome Fahrzeug 1 sich von der temporären Zone entfernt, so werden alle temporären Objekte 32, die in dem temporären Bereich 30 verzeichnet sind, welcher der temporären Zone zugeordnet ist, gelöscht. Nachdem das autonome Fahrzeug 1 sich von der temporären Zone entfernt hat ist der besagte temporäre Bereich 30 in der Karte wieder frei von temporären Objekten 32.

### Bezugszeichenliste

- 1: autonomes Fahrzeug
- 10: dynamischer Bereich
- 20: statischer Bereich
- 25: statisches Objekt
- 30: temporärer Bereich
- 32: temporäres Objekt

## Patentansprüche

1. Verfahren zum Betrieb einer technischen Anlage, welche
mindestens ein autonomes Fahrzeug (1) umfasst, wobei
das autonome Fahrzeug (1) mindestens einen Sensor
zur Erkennung von Gegenständen aufweist, und wobei
das autonome Fahrzeug (1) über eine Karte der technischen Anlage verfügt, und wobei
die technische Anlage mindestens eine statische Zone umfasst,
welcher in der Karte ein statischer Bereich (20) zugeordnet ist,
in welchem mindestens ein statisches Objekt (25) verzeichnet ist, und wobei
die technische Anlage mindestens eine temporäre Zone umfasst,
welcher in der Karte ein temporärer Bereich (30) zugeordnet ist,
in welchem temporäre Objekte (32) verzeichenbar sind, und wobei
wenn von dem Sensor in einer temporären Zone ein Gegenstand erkannt wird,
dem erkannten Gegenstand ein temporäres Objekt (32) zugeordnet wird, und
das temporäre Objekt (32) in dem der temporären Zone zugeordneten temporären Bereich (30) der Karte verzeichnet wird,
**dadurch gekennzeichnet, dass**
wenn das autonome Fahrzeug (1) sich von der temporären Zone entfernt alle in dem der temporären Zone zugeordneten temporären Bereich (30) verzeichneten temporären Objekte (32) gelöscht werden.

2. Verfahren nach einem der vorangegangenen Ansprüche, **dadurch gekennzeichnet, dass** bei der Erkennung eines Gegenstandes von dem mindestens einen Sensor eine Entfernung zu dem Gegenstand erfasst wird, und
eine Richtung, in welcher sich der Gegenstand befindet, erfasst wird

3. Verfahren nach einem der vorangegangenen Ansprüche, **dadurch gekennzeichnet, dass** der mindestens eine Sensor als Laserscanner oder als 3D-Kamera ausgebildet ist.

4. Verfahren nach einem der vorangegangenen Ansprüche, **dadurch gekennzeichnet, dass** das autonome Fahrzeug (1)
eine Antriebseinrichtung, einen elektrischen Energiespeicher zur Versorgung der Antriebseinrichtung, eine Steuereinheit zur Steuerung der Antriebseinrichtung sowie eine Kommunikationsvorrichtung zur drahtlosen Kommunikation über ein Netzwerk aufweist.

5. Verfahren nach einem der vorangegangenen Ansprüche, **dadurch gekennzeichnet, dass** wenn von dem mindestens einen Sensor
ein in einer statischen Zone befindlicher Gegenstand erkannt wird,
durch Vergleichen des erkannten Gegenstandes mit mindestens einem statischen Objekt (25), welches in dem der statischen Zone zugeordneten statischen Bereich (20) verzeichnet ist,
ein Standort des autonomen Fahrzeugs (1) in der Karte bestimmt wird.

6. Verfahren nach einem der vorangegangenen Ansprüche, **dadurch gekennzeichnet, dass** wenn das autonome Fahrzeug (1) sich von der temporären Zone entfernt alle in dem der temporären Zone zugeordneten temporären Bereich (30) verzeichneten temporären Objekte (32) unverzüglich gelöscht werden.

7. Verfahren nach einem der Ansprüche 1 bis 5, **dadurch gekennzeichnet, dass** wenn das autonome Fahrzeug (1) sich von der temporären Zone entfernt alle in dem der temporären Zone zugeordneten temporären Bereich (30) verzeichneten temporären Objekte (32) nach einer bestimmten Zeitdauer gelöscht werden.

8. Verfahren nach einem der vorangegangenen Ansprüche, **dadurch gekennzeichnet, dass** einem temporären Objekt (32) ein Aufenthaltszähler und ein Ortszähler zugeordnet werden, und dass
der Aufenthaltszähler inkrementiert wird, wenn das temporäre Objekt (32) erkannt wird, und dass
der Ortszähler inkrementiert wird, wenn ein Ort, an welchem sich das temporäre Objekt (32) zuletzt befunden hat, von dem mindestens einen Sensor beobachtet wird, und dass ein Quotient aus dem Aufenthaltszähler und dem Ortszähler gebildet wird.

9. Verfahren nach Anspruch 8, **dadurch gekennzeichnet, dass**
wenn das autonome Fahrzeug (1) sich von der temporären Zone entfernt alle in dem der temporären Zone zugeordneten temporären Bereich (30) verzeichneten temporären Objekte (32) nach einer variablen Zeitdauer gelöscht werden, wobei
die variable Zeitdauer von dem aus dem Aufenthaltszähler und dem Ortszähler gebildeten Quotient abhängig ist.

10. Verfahren nach einem der vorangegangenen Ansprüche, **dadurch gekennzeichnet, dass** wenn von dem mindestens einen Sensor
ein in einer temporären Zone befindlicher Gegenstand erkannt wird,
durch Vergleichen des erkannten Gegenstandes mit mindestens einem temporären Objekt (32), welches in dem der temporären Zone zugeordneten temporären Bereich (30) verzeichnet ist,
ein Standort des autonomen Fahrzeugs (1) in der Karte bestimmt wird.

11. Verfahren nach einem der vorangegangenen Ansprüche, **dadurch gekennzeichnet, dass** bevor das autonome Fahrzeug (1) sich der temporären Zone nähert
alle in dem der temporären Zone zugeordneten temporären Bereich (30) verzeichneten temporären Objekte (32) gelöscht werden.

12. Verfahren nach einem der vorangegangenen Ansprüche, **dadurch gekennzeichnet, dass** wenn einem von dem Sensor erkannten Gegenstand ein temporäres Objekt (32) zugeordnet wird, Informationen zu dem temporären Objekt (32) über ein Netzwerk an einen Server in der technischen Anlage übermittelt werden.

13. Verfahren nach einem der vorangegangenen Ansprüche, **dadurch gekennzeichnet, dass** wenn einem von dem Sensor erkannten Gegenstand ein temporäres Objekt (32) zugeordnet wird, Informationen zu dem temporären Objekt (32) über ein Netzwerk an mindestens ein weiteres autonomes Fahrzeug (1) in der technischen Anlage übermittelt werden.

14. Technische Anlage, umfassend
mindestens ein autonomes Fahrzeug (1), wobei
das autonome Fahrzeug (1) mindestens einen Sensor
zur Erkennung von Gegenständen aufweist, und wobei
das autonome Fahrzeug (1) über eine Karte der technischen Anlage verfügt, und wobei die technische Anlage mit dem Verfahren nach einem der vorangegangenen Ansprüche betreibbar ist.

## Claims

1. A method of operating a technical installation which comprises at least one autonomous vehicle (1), wherein the autonomous vehicle (1) has at least one sensor for identifying items, and wherein the autonomous vehicle (1) has a map of the technical installation at its disposal, and wherein the technical installation comprises at least one static zone to which on the map there is assigned a static region (20) in which at least one static object (25) is marked, and wherein the technical installation comprises at least one temporary zone to which on the map there is assigned a temporary region (30) in which temporary objects (32) can be marked, and wherein when an item is identified in a temporary zone by the sensor, a temporary object (32) is assigned to the identified item and the temporary object (32) is marked in the temporary region (30) of the map assigned to the temporary zone,
**characterised in that**
when the autonomous vehicle (1) leaves the temporary zone, all temporary objects (32) marked in the temporary region (30) assigned to the temporary zone are deleted.

2. A method according to any one of the preceding claims, **characterised in that** upon identification of an item by the at least one sensor there is detected a distance from the item and there is detected a direction in which the item is located.

3. A method according to any one of the preceding claims, **characterised in that** the at least one sensor is in the form of a laser scanner or a 3D camera.

4. A method according to any one of the preceding claims, **characterised in that** the autonomous vehicle (1) has a drive device, an electrical energy storage device to supply the drive device, a control unit to control the drive device and a communication device for wireless communication via a network.

5. A method according to any one of the preceding claims, **characterised in that** when the at least one sensor identifies an item located in a static zone, a location of the autonomous vehicle (1) on the map is determined by comparison of the identified item with at least one static object (25) marked in the static region (20) assigned to the static zone.

6. A method according to any one of the preceding claims, **characterised in that** when the autonomous vehicle (1) leaves the temporary zone, all temporary objects (32) marked in the temporary region (30) assigned to the temporary zone are deleted immediately.

7. A method according to any one of claims 1 to 5, **characterised in that** when the autonomous vehicle (1) leaves the temporary zone, all temporary objects (32) marked in the temporary region (30) assigned to the temporary zone are deleted after a certain period of time.

8. A method according to any one of the preceding claims, **characterised in that** a stay counter and a place counter are associated with a temporary object (32), and **in that** the stay counter is incremented when the temporary object (32) is identified, and **in that** the place counter is incremented when a place at which the temporary object (32) was last located is observed by the at least one sensor, and **in that** a quotient is then formed from the stay counter and the place counter.

9. A method according to claim 8, **characterised in that** when the autonomous vehicle (1) leaves the temporary zone, all temporary objects (32) marked in the temporary region (30) assigned to the temporary zone are deleted after a variable period of time, wherein the variable period of time is dependent on the quotient formed from the stay counter and the place counter.

10. A method according to any one of the preceding claims, **characterised in that** when an item located in a temporary zone is identified by the at least one sensor, a location of the autonomous vehicle (1) on the map is determined by comparison of the identified item with at least one temporary object (32) which is marked in the temporary region (30) which is assigned to the temporary zone.

11. A method according to any one of the preceding claims, **characterised in that** before the autonomous vehicle (1) approaches the temporary zone there are deleted all temporary objects (32) which are marked in the temporary region (30) which is assigned to the temporary zone.

12. A method according to any one of the preceding claims, **characterised in that** when a temporary object (32) is assigned to an item identified by the sensor, information about the temporary object (32) is transmitted via a network to a server in the technical installation.

13. A method according to any one of the preceding claims, **characterised in that** when a temporary object (32) is assigned to an item identified by the sensor, information about the temporary object (32) is transmitted via a network to at least one further autonomous vehicle (1) in the technical installation.

14. A technical installation comprising
at least one autonomous vehicle (1), wherein
the autonomous vehicle (1) has at least one sensor for identification of items, and wherein
the autonomous vehicle (1) has a map of the technical installation at its disposal, and wherein
the technical installation can be operated using the method according to any one of the preceding claims.

## Revendications

1. Procédé de fonctionnement d'une installation technique, laquelle
comprend au moins un véhicule autonome (1), dans lequel
le véhicule autonome (1) comprend au moins un capteur
pour la détection d'objets, et dans lequel
le véhicule autonome (1) dispose d'une carte de l'installation technique, et dans lequel l'installation technique comprend au moins une zone statique,
à laquelle dans la carte une zone statique (20) est associée,
dans laquelle au moins un objet statique (25) est enregistré, et dans lequel l'installation technique comprend au moins une zone temporaire,
à laquelle dans la carte une zone temporaire (30) est associée,
dans laquelle des objets temporaires (32) peuvent être enregistrés, et dans lequel lorsqu'un objet est détecté par le capteur dans une zone temporaire,
à l'objet détecté un objet temporaire (32) est associé, et
l'objet temporaire (32) est enregistré dans la zone temporaire (30) associée à la zone temporaire de la carte,
**caractérisé en ce que**
lorsque le véhicule autonome (1) s'éloigne de la zone temporaire, tous les objets temporaires (32) enregistrés dans la zone temporaire (30) associée à la zone temporaire sont supprimés.

2. Procédé selon l'une des revendications précédentes, **caractérisé en ce que** lors de la détection d'un objet par le ou les capteurs,
une distance à l'objet est détectée, et
une direction dans laquelle se trouve l'objet est détectée

3. Procédé selon l'une des revendications précédentes, **caractérisé en ce que**
le ou les capteurs sont conçus comme un scanner laser ou comme une caméra 3D.

4. Procédé selon l'une des revendications précédentes, **caractérisé en ce que**
le véhicule autonome (1)
comprend un dispositif d'entraînement, un accumulateur électrique pour l'alimentation du dispositif d'entraînement, une unité de commande pour la commande du dispositif d'entraînement ainsi qu'un dispositif de communication pour la communication sans fil via un réseau.

5. Procédé selon l'une des revendications précédentes, **caractérisé en ce que** lorsque par le ou les capteurs
un objet situé dans une zone statique est détecté,
par comparaison de l'objet détecté avec au moins un objet statique (25),
lequel est enregistré dans la zone statique (20) associée à la zone statique,
une position du véhicule autonome (1) dans la carte est déterminée.

6. Procédé selon l'une des revendications précédentes, **caractérisé en ce que**
lorsque le véhicule autonome (1) s'éloigne de la zone temporaire,
tous les objets temporaires (32) enregistrés dans la zone temporaire (30) associée à la zone temporaire sont supprimés immédiatement.

7. Procédé selon l'une des revendications 1 à 5, **caractérisé en ce que**
lorsque le véhicule autonome (1) s'éloigne de la zone temporaire,
tous les objets temporaires (32) enregistrés dans la zone temporaire (30) associée à la zone temporaire sont supprimés après une durée déterminée.

8. Procédé selon l'une des revendications précédentes, **caractérisé en ce qu'**à un objet temporaire (32) un compteur de présence et un compteur de position sont associés, et
**que**
le compteur de présence est incrémenté lorsque l'objet temporaire (32) est détecté, et
**que**
le compteur de position est incrémenté lorsqu'un lieu où l'objet temporaire (32) s'est trouvé en dernier est observé par le ou les capteurs, et que
un quotient du compteur de présence et du compteur de position est formé.

9. Procédé selon la revendication 8, **caractérisé en ce que**
lorsque le véhicule autonome (1) s'éloigne de la zone temporaire,
tous les objets temporaires (32) enregistrés dans la zone temporaire (30) associée à la zone temporaire sont supprimés après une durée variable, la durée variable dépendant du quotient formé à partir du compteur de présence et du compteur de position.

10. Procédé selon l'une des revendications précédentes, **caractérisé en ce que** lorsque par le ou les capteurs
un objet situé dans une zone temporaire est détecté,
par comparaison de l'objet détecté avec au moins un objet temporaire (32),
lequel est enregistré dans la zone temporaire (30) associée à la zone temporaire, une position du véhicule autonome (1) dans la carte est déterminée.

11. Procédé selon l'une des revendications précédentes, **caractérisé en ce que**
avant que le véhicule autonome (1) ne s'approche de la zone temporaire,
tous les objets temporaires (32) enregistrés dans la zone temporaire (30) associée à la zone temporaire sont supprimés.

12. Procédé selon l'une des revendications précédentes, **caractérisé en ce que** lorsqu'à un objet détecté par le capteur un objet temporaire (32) est associé,
des informations concernant l'objet temporaire (32) sont transmises via un réseau à un serveur dans l'installation technique.

13. Procédé selon l'une des revendications précédentes, **caractérisé en ce que** lorsqu'à un objet détecté par le capteur un objet temporaire (32) est associé, des informations concernant l'objet temporaire (32) sont transmises via un réseau à au moins un autre véhicule autonome (1) dans l'installation technique.

14. Installation technique, comprenant
au moins un véhicule autonome (1), dans lequel
le véhicule autonome (1) comprend au moins un capteur
pour la détection d'objets, et dans lequel
le véhicule autonome (1) dispose d'une carte de l'installation technique, et dans lequel l'installation technique peut être exploitée selon le procédé selon l'une des revendications précédentes.
